(19) Europäisches Patentamt / European Patent Office / Office européen des brevets

(11) **EP 4 685 744 A1**

(12) **EUROPEAN PATENT APPLICATION**
published in accordance with Art. 153(4) EPC

(43) Date of publication:
**28.01.2026 Bulletin 2026/05**

(21) Application number: **24774699.3**

(22) Date of filing: **07.03.2024**

(51) International Patent Classification (IPC):
**G06T 7/269** (2017.01)    **G06T 7/38** (2017.01)
**G01M 3/38** (2006.01)    **G01F 1/00** (2022.01)
**G01F 1/7086** (2022.01)    **G01M 3/02** (2006.01)
**G01P 5/18** (2006.01)    **H04N 23/62** (2023.01)
**H04N 23/63** (2023.01)    **H04N 23/68** (2023.01)

(52) Cooperative Patent Classification (CPC):
**G06T 7/38; G01F 1/00; G01F 1/7086; G01M 3/02;
G01M 3/38; G01P 5/18; G06T 7/269; H04N 23/62;
H04N 23/63; H04N 23/68;** G06T 2207/10016;
G06T 2207/10048; G06T 2207/30232

(86) International application number:
**PCT/JP2024/008698**

(87) International publication number:
**WO 2024/195560 (26.09.2024 Gazette 2024/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **20.03.2023 JP 2023044224**

(71) Applicant: **KONICA MINOLTA, INC.
Tokyo 100-7015 (JP)**

(72) Inventor: **ASANO Motohiro
Tokyo 100-7015 (JP)**

(74) Representative: **MFG Patentanwälte
Meyer-Wildhagen Meggle-Freund
Gerhard PartG mbB
Amalienstraße 62
80799 München (DE)**

(54) **IMAGE PROCESSING DEVICE, GAS FLOW RATE ESTIMATION SYSTEM, PROGRAM, AND GAS FLOW RATE ESTIMATION METHOD**

(57) Provided is an image processing device in which an area for performing gas flow rate estimation can be designated with respect to time-series images on which correction for aligning image positions has been performed. A gas flow rate estimation device 3 comprises: an image data input unit 9 to which time-series images taken of a subject including an object being monitored are inputted; an image stabilization unit 10 for performing correction to align image positions of the object being monitored between the time-series images; an image/warning display unit 12 for displaying a setting screen for receiving, in an area input unit 13, designation of an area for performing gas flow rate estimation, with respect to the time-series images on which the correction for aligning the image positions has been performed; and a gas flow rate estimation unit 15 for estimating a gas flow rate from the time-series images in which the area for performing gas flow rate estimation has been set.

EP 4 685 744 A1

# FIG.1A

INFRARED RAYS CAMERA

2

5 — OPTICAL SYSTEM

6 — FILTER

7 — IMAGING ELEMENT

8 — SIGNAL PROCESSING SECTION

1

3 — GAS FLOW RATE ESTIMATION APPARATUS (IMAGE PROCESSING APPARATUS)

9 — IMAGE DATA INPUT SECTION

10 — BLUR CORRECTION SECTION

11 — BLUR CORRECTION SUCCESS/FAILURE DETERMINATION SECTION

12 — IMAGE/WARNING DISPLAY PART

13 — AREA INPUT SECTION

14 — AREA SUCCESS/FAILURE DETERMINATION SECTION

15 — GAS FLOW RATE ESTIMATION SECTION

4 — OUTPUT SECTION

## Description

Technical Field

The present invention relates to an image processing apparatus that estimates a gas flow rate from a time-series image, a gas flow rate estimation system, a program executed by a computer of an image processing apparatus that estimates a gas flow rate from a time-series image, and a gas flow rate estimation method.

Background Art

As a technique for estimating the flow rate of leaked gas, a technique for estimating the gas flow rate based on the gas area included in the image has been proposed (see, for example, PTL 1).

The estimation of gas flow rate is performed using an infrared image obtained by capturing a subject including a monitoring target with an infrared rays camera, or an image obtained by performing image processing to extract frequency components from the infrared image. In PTL 1, the gas passage time during which leaked gas passes through the gas area is calculated using the average movement vector of the gas area included in the image. Further, the amount of gas in the gas area is calculated using the gas concentration thickness product of the gas area. The estimation value of gas flow rate is calculated by using the gas passage time and the amount of gas.

Citation List

Patent Literature

PTL 1: International Publication WO2020/110411 Gazette

Summary of Invention

Technical Problem

Conventionally, infrared rays camera is assumed to be used fixed with a tripod or the like. On the other hand, in order to improve the efficiency of gas inspection work, there is a request from the user to shoot with an infrared rays camera by hand.

By fixing the infrared rays camera and taking images, the image position of the gas area does not greatly shift between time-series images such as videos. On the other hand, when shooting with an infrared camera by hand, the shooting field of view may move due to an operation in which the camera is moved horizontally, which is called so-called panning. However, when performing flow rate estimation by the method of PTL 1, the processing is performed on the assumption that the field of view of the image does not move. Therefore, when flow rate estimation is performed using an image that follows the shooting field of view, it is not possible to obtain a correct estimated value of the gas flow rate.

In addition, in order to estimate the gas flow rate, the user is made to specify an area for estimating the gas flow rate in the time-series image. However, it will be difficult to specify an area if the shooting field of view moves.

The present invention has been made to solve such problems, and an object thereof is to provide an image processing apparatus, a gas flow rate estimation system, a program, and a gas flow rate estimation method, which make it possible to specify an area for estimating a gas flow rate for a time-series image in which correction for aligning image positions has been performed.

Solution to Problem

In order to solve the above-described problem, the present invention is an image processing apparatus that estimates a gas flow rate from time-series images, the apparatus comprising: an image input section to which time-series images photographed of a subject including a monitoring target are input; a correction section that performs correction to align image positions of the monitoring target among the time-series images; an area input section that receives a designation of an area for estimating a gas flow rate; a display part that displays a setting screen for receiving, at the area input section, the designation of the area for estimating the gas flow rate for the time-series images for which the correction to align the image positions has been performed; and an estimation section that estimates the gas flow rate from the time-series images for which the area for estimating the gas flow rate is set.

In addition, the present invention is a gas flow rate estimation system comprising: an infrared rays camera that photographs a subject including a monitoring target; and an image processing apparatus that estimates a gas flow rate from time-series images taken by the infrared rays camera, wherein the image processing apparatus includes: an image input section to which time-series images photographed of the subject including the monitoring target by the infrared rays camera are input; a correction section that performs correction to align image positions of the monitoring target among the time-series images; an area input section that receives a designation of an area for estimating a gas flow rate; a display part that displays a setting screen for receiving, at the area input section, the designation of the area for estimating the gas flow rate for the time-series images for which the correction to align the image positions has been performed; and an estimation section that estimates the gas flow rate from the time-series images for which the area for estimating the gas flow rate is set.

Further, the present invention is a program executed by a computer of an image processing apparatus that estimates a gas flow rate from time-series images, the program causing the computer to execute: a step of inputting time-series images photographed of a subject including a monitoring target; a step of performing correction to align image positions of the monitoring target among the time-series images; a step of receiving a designation of an area for estimating a gas flow rate; a step of displaying a setting screen for receiving the designation of the area for estimating the gas flow rate for the time-series images for which the correction to align the image positions has been performed; and a step of estimating the gas flow rate from the time-series images for which the area for estimating the gas flow rate is set.

In addition, the present invention is a gas flow rate estimation method comprising: a step of inputting time-series images photographed of a subject including a monitoring target; a step of performing correction to align image positions of the monitoring target among the time-series images; a step of receiving a designation of an area for estimating a gas flow rate; a step of displaying a setting screen for receiving the designation of the area for estimating the gas flow rate for the time-series images for which the correction to align the image positions has been performed; and a step of estimating the gas flow rate from the time-series images for which the area for estimating the gas flow rate is set.

Advantageous Effects of Invention

According to the present invention, it is possible to allow the designation of an area for estimating the gas flow rate with respect to a time-series image in which correction for aligning image positions has been performed. This makes it easy to set the monitoring target in the image so that it enters the area where the gas flow rate is estimated. In addition, correction for aligning image positions is performed, and by estimating the gas flow rate from a time series of images in which an area for estimating the gas flow rate is set, it is possible to improve the accuracy of gas flow rate estimation.

Brief Description of Drawings

[FIG. 1A] It is a block diagram showing the configuration of the gas flow rate estimation system according to the present embodiment.

[FIG. 1B] It is a block diagram showing the hardware configuration of the gas flow rate estimation apparatus.

[FIG. 2] It is a flowchart showing an example of a gas flow rate estimation method according to the present embodiment.

[FIG. 3A] It is a description showing an example of an image before and after blur correction in FIG. 3A.

[FIG. 3B] It is an explanatory diagram showing an example of an image before and after blur correction.

[FIG. 3C] It is an explanatory diagram showing an example of an image before and after blur correction.

[FIG. 4A] It is an explanatory diagram showing another example of images before and after blur correction and the relationship with image processing.

[FIG. 4B] It is an explanatory diagram showing another example of an image before and after blur correction and the relationship of image processing.

[FIG. 4C] It is an explanatory diagram showing another example of an image before and after blur correction and the relationship of image processing.

[Fig. 5A] It is an explanatory diagram showing an example of an image in which blur correction has been properly performed between time-series images (infrared images).

[FIG. 5B] It is an explanatory diagram showing an example of an image (infrared image) in which blur correction has been correctly performed between images in a time series.

[FIG. 5C] It is an explanatory diagram showing an example of an image obtained by extracting an edge from an image in which blur correction has been properly performed between time-series images.

[FIG. 5D] It is an explanatory diagram showing an example of an image in which an edge is extracted from an image that has been properly blur-corrected among time-series images.

[Fig. 6A] It is an explanatory diagram showing an example of an image in which blur correction could not be properly performed between time-series images (infrared images).

[FIG. 6B] It is an explanatory diagram showing an example of an image in which image blur correction could not be properly performed between time-series images (infrared images).

[FIG. 6C] It is an explanatory diagram showing an example of an image in which blur correction could not be properly performed between time-series images (infrared images).

[FIG. 6D] It is an explanatory diagram showing an example of an image (infrared image) for which blur correction could not be properly performed among time-series images.

[FIG. 7A] It is an explanatory diagram showing an example of a setting screen.

[FIG. 7B] It is an explanatory diagram showing an example of output of a determination result of the success or failure of blur correction.

[FIG. 7C] It is an explanatory diagram showing an example of output of determination result of acceptability of area input.

[FIG. 8A] It is an explanatory diagram showing an example of an image (infrared image) in which the area where the gas was present is within the imaging field of view and correct blur correction has been performed.

[FIG. 8B] It is an explanatory diagram showing an example of an image (infrared image) in which the area where the gas was present is out of the imaging field.

[FIG. 9A] It is an explanatory diagram showing an example of an image (gas image) in which an area where gas was present is within the imaging field of view and correct blur correction has been performed.

[FIG. 9B] It is an explanatory diagram showing an example of an image (gas image) in which the area where the gas was present has been excluded from the imaging field.

[FIG. 10A] It is an explanatory diagram showing an example of output of estimation results of gas flow rate.

[FIG. 10B] It is an explanatory diagram showing an example of output when the gas flow rate cannot be estimated.

[Fig. 10C] It is an explanatory diagram showing an example of output when the gas flow rate cannot be estimated.

[FIG. 11A] It is an explanatory diagram showing an example of an original infrared image from which a gas image was generated.

[FIG. 11B] It is an explanatory diagram showing an example of an original infrared image from which a gas image was generated.

[FIG. 11C] It is an explanatory diagram showing an example of an original infrared image from which a gas image was generated.

[Fig. 12A] It is an explanatory diagram showing an example of an image used for area designation.

[FIG. 12B] It is an explanatory diagram showing an example of an image used for area designation.

[FIG. 12C] It is an explanatory diagram showing an example of an image used for area designation.

[FIG. 12D] It is an explanatory diagram showing an example of an image used for area designation.

Description of Embodiments

Hereinafter, with reference to the drawings, a gas flow rate estimation apparatus as an embodiment of an image processing apparatus of the present invention will be described. Further, embodiments of a gas flow rate estimation system of the present invention, a program executed by a computer of a gas flow rate estimation apparatus, and a gas flow rate estimation method will be described.

<the present embodiment gas flow rate estimation apparatus, gas flow rate estimation system, and program configuration example>

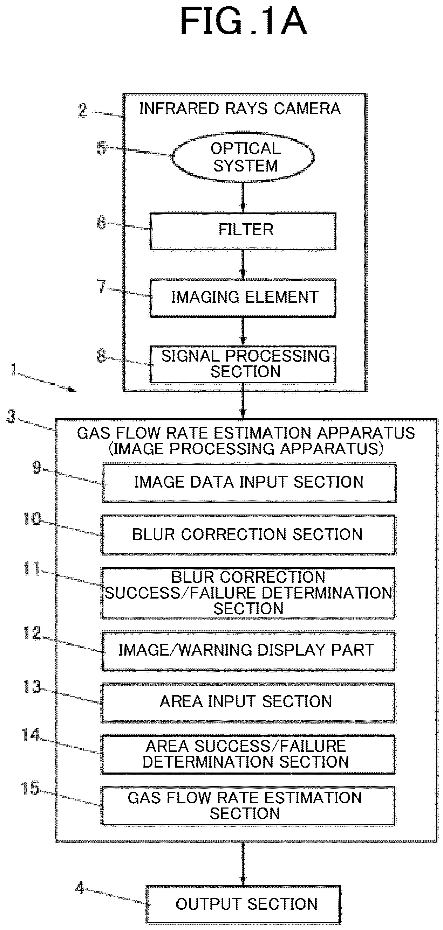

FIG. 1A is a block diagram showing the configuration of a gas flow rate estimation system 1 according to the present embodiment. The gas flow rate estimation system 1 includes an infrared rays camera 2, a gas flow rate estimation apparatus 3, and an output section 4. It is also possible that the gas flow rate estimation apparatus 3 is configured to include an infrared rays camera 2 and an output section 4.

The infrared rays camera 2 captures infrared images, such as moving images taken in time series, of a subject including a monitoring target for gas leakage, and generates image data MD. The monitoring target for gas leakage is, for example, where gas transport pipes are connected to each other. The infrared image may be a plurality of infrared images captured in a time series, and is not limited to a moving image.

The infrared rays camera 2 includes an optical system 5, a filter 6, an imaging element 7, and a signal processing section 8. The optical system 5 is a lens that forms an image of the subject's infrared image on the imaging element 7.

The filter 6 is disposed between the optical system 5 and the imaging element 7, and allows only infrared rays of a specific wavelength among the light that has passed through the optical system 5 to pass. Among the wavelength bands of infrared rays, the wavelength band that passes through filter 6 depends on the type of gas to be detected. For example, in the case of methane, a filter 6 that allows infrared rays in the wavelength band of 3.2 to 3.4 $\mu$m to pass through is used.

The imaging element 7 is a two-dimensional image sensor. The imaging element 7 is, for example, a cooled indium antimonide (InSb) image sensor, and receives infrared rays that have passed through the filter 6. The signal processing section 8 converts the analog signal output from the imaging element 7 into a digital signal and performs known image processing. If the infrared image is a moving image, this digital signal becomes the moving image data MD.

The gas flow rate estimation apparatus 3 is an example of an image processing apparatus, and is a personal computer, smartphone, tablet, or the like. The gas flow rate estimation apparatus 3 includes, as function blocks, an image data input section 9, a blur correction section 10, a blur correction success/failure determination section 11, an image/warning display part 12, an area input section 13, an area success/failure determination section 14, and a gas flow rate estimation section 15.

The image data input section 9 is an example of an input section, and is a communication interface that communicates with a communication section (not shown) of the infrared rays camera 2. Image data MD sent from the infrared rays camera 2 is input to the image data input section 9. The image data input section 9 sends the image data MD to the blur correction section 10.

The blur correction section 10 is an example of a correction section, performs correction to align the image position of the image data MD, and generates corrected image data MD1. the blur correction section 10 aligns the image position for each frame if the image data MD is a moving image, or for each still image if the image data is a still image captured in chronological order. Correction for aligning the image position of the image data MD is performed, for example, by using the method described in International Publication No. WO2017/179510 A1 filed by the same applicant as the present invention.

The blur correction success/failure determination section 11 is an example of a correction success/failure determination section, and determines whether the image positions are aligned in the corrected image data MD1 in which blur correction for aligning image positions has been performed. The blur correction success/failure determination section 11 determines whether the image positions are aligned for each frame if the image data MD is a moving image, or for each still image if the image data MD is a still image captured in chronological order.

The image/warning display part 12 is an example of a display part and a warning section, and displays a setting screen for receiving designation of an area for estimating the gas flow rate for the corrected image data MD1 on the output section 4. When it is determined that there is an image in which the image positions are not aligned beyond a predetermined threshold value in the corrected image data MD1, the image/warning display part 12 displays the warning on the setting screen.

The area input section 13 receives a designation of an area for estimating the gas flow rate with respect to the corrected image data MD1. The area success/failure determination section 14 determines whether an image exists in the set area. When it is determined that no image exists in the set area, the image/warning display part 12 displays a warning on the setting screen.

The gas flow rate estimation section 15 is an example of an estimation section, and obtains an estimated value of the gas flow rate for an image within a set area using the corrected data MD1. The gas flow rate is estimated, for example, using the method described in International Publication No. WO2020/110411 A1, filed by the same applicant as the present application. In International Publication No. WO2020/110411 A1, the gas passage time during which the leaked gas passes through the gas area is calculated using the average movement vector of the gas area included in the image. Further, the amount of gas in the gas area is calculated using the gas concentration thickness product of the gas area. The estimation value of gas flow rate is calculated by using the gas passage time and the amount of gas.

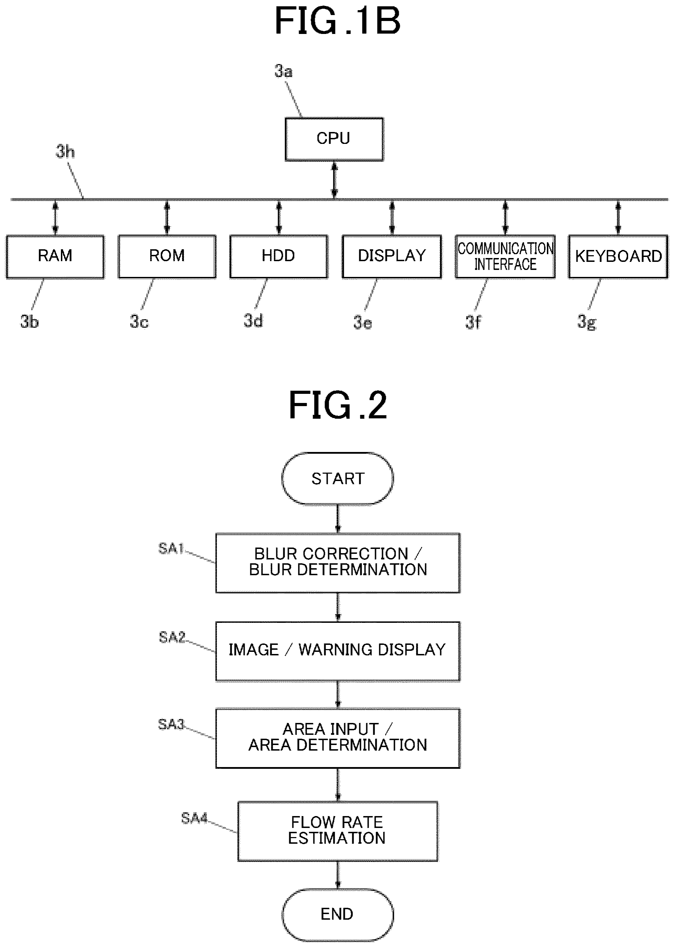

FIG. 1B is a block diagram showing the hardware configuration of the gas flow rate estimation apparatus 3 shown in FIG. 1A. The gas flow rate estimation apparatus 3 includes a CPU (Central Processing Unit) 3a, which is an example of a computer. The gas flow rate estimation apparatus 3 is equipped with RAM (Random Access Memory) 3b, ROM (Read Only Memory) 3c, HDD (Hard Disk Drive) 3d, display 3e, communication interface 3f, keyboard 3g, and bus 3h to connect them.

The display 3e is hardware that implements the output section 4. The display 3e is, for example, a liquid crystal display. The display 3e may be an Organic Light Emitting Diode display (OLED), plasma display, etc., instead of a liquid crystal display.

The communication interface 3f is hardware that implements the image data input section 9. The keyboard 3g is hardware that implements the area input section 13. Instead of a keyboard, a touch screen or a mouse may also be used.

In the storage section HDD 3d, programs for realizing these function blocks for the blur correction section 10, blur correction success/failure determination section 11, image/warning display part 12, area input section 13, area success/failure determination section 14, and gas flow rate estimation section 15 are stored. In addition, various types of data such as image data MD and corrected image data MD1 are stored in the HDD 3d.

A program that implements the blur correction section 10 acquires image data MD, performs correction to align the image position of the image data MD, and generates corrected image data MD1. The program that implements the blur correction success/failure determination section 11 is a program that determines whether the image positions are aligned in the corrected image data MD1, to which blur correction for aligning image positions has been performed.

A program for realizing the image/warning display part 12 is a program that displays a setting screen on the display 3e, which accepts the designation of an area for estimating the gas flow rate for the corrected image data MD1. In addition, a program that implements the image/warning display part 12 is a program that, when it is determined that there is an image in the corrected image data MD1 whose image position is not aligned beyond a predetermined threshold value, displays a warning on the setting screen.

A program that implements the area input section 13 is a program that receives a designation of an area for estimating the gas flow rate with respect to the corrected image data MD1. A program that implements the image/warning display part 12 determines that no image exists in the set area, and displays a warning on the setting screen.

A program that implements the gas flow rate estimation section 15 is a program that obtains an estimated value of the gas flow rate for an image in a set area using the corrected data MD1.

These programs are stored in advance in the HDD 3d, but are not limited thereto. For example, a storage medium storing these programs may be provided, and the program stored in this storage medium may be stored in the HDD 3d. The storage medium storing these program is, for example, an external storage medium such as a magnetic disk, an optical disk, or an SSD (Solid State Drive). In addition, these programs are stored in a server connected to the gas flow rate estimation apparatus 3 via a wired or wireless network, and these programs may be sent to the HDD 3d via the network and stored in the HDD 3d. These programs may be stored in the ROM 3c instead of the HDD 3d. The gas flow rate estimation apparatus 3 is provided with a flash memory instead of the HDD 3d, and these program may be stored in the flash memory.

The CPU 3a reads out these program from the HDD 3d, expands them in the RAM 3b, and executes the expanded program. Thus, a blur correction section 10, a blur correction success/failure determination section 11, an image/warning display part 12, an area input section 13, an area success/failure determination section 14, and a gas flow rate estimation section 15 are realized. However, regarding these functions, a part or all of each function may be implemented by processing by a DSP (Digital Signal Processor) instead of, or together with, processing by the CPU 3a. Similarly, all or part of each function may be implemented by processing with a dedicated hardware circuit instead of, or together with, processing by software.

<Operation example of the gas flow rate estimation apparatus, gas flow rate estimation system, and program of the present embodiment>

FIG. 2 is a flowchart showing an example of a gas flow rate estimation method according to the present embodiment. Next, as a gas flow rate estimation method, an example of the operation of the gas flow rate estimation system 1, the gas flow rate estimation apparatus 3, and the program executed by the gas flow rate estimation apparatus 3 will be described.

the blur correction section 10, by a program executed by the CPU 3a, performs correction to align the image position of the image data MD in step S A1 of FIG. 2, and generates corrected image data MD1. The blur correction success/failure determination section 11 determines, in step SA1, whether the image positions are aligned for the corrected image data MD1, by a program executed by the CPU 3a.

The image/warning display part 12 displays the setting screen on the output section 4 (display 3e) by a program executed by the CPU 3a in step S A2. When it is determined that there is an image in which the image positions are not aligned beyond a predetermined threshold value in the corrected image data MD1, the image/warning display part 12 displays the warning on the setting screen.

The area input section 13 receives, by a program executed by the CPU 3a, in step S A3, a designation of an area for estimating the gas flow rate with respect to the corrected image data MD1. The area success/failure determination section 14 determines whether an image exists in the set area. When it is determined that an image does not exist in the set area, the image/warning display part 12 displays a warning on the setting screen.

The gas flow rate estimation section 15 obtains an estimated value of the gas flow rate for the image in the set area in step S A4 by using the corrected data MD1, by a program executed by the CPU 3a.

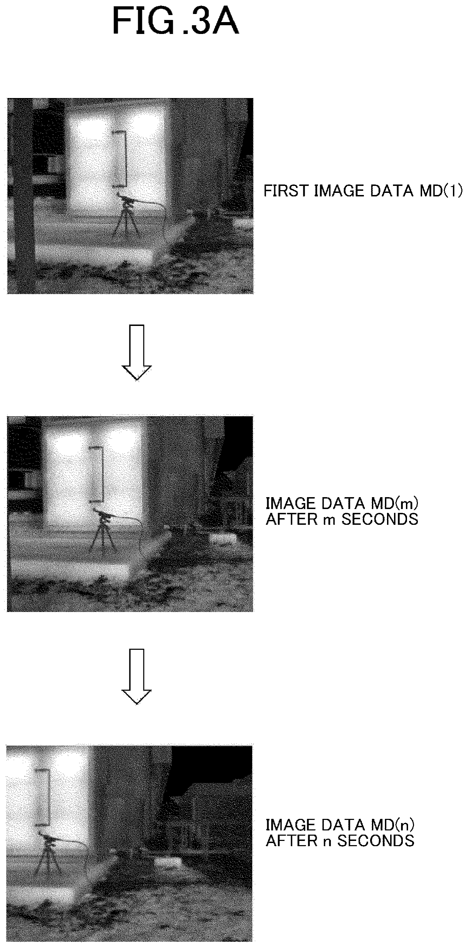

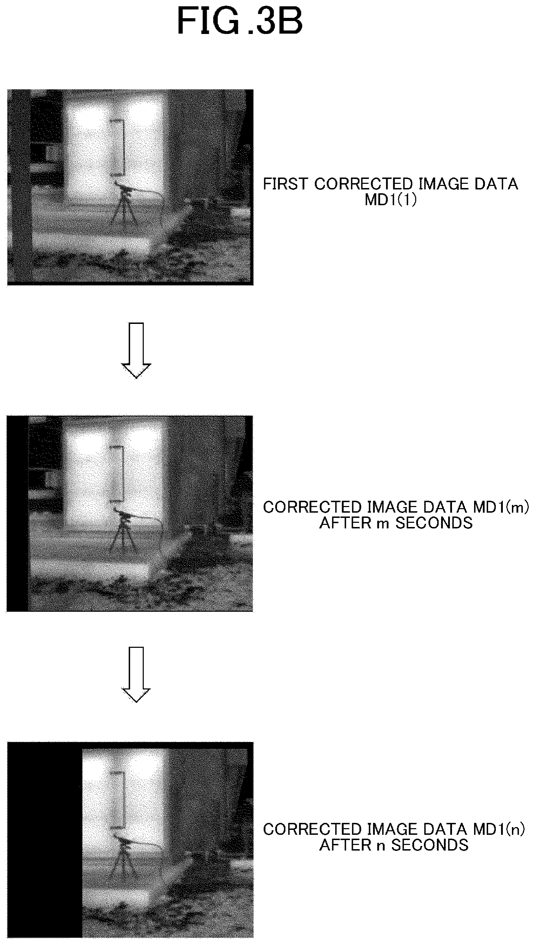

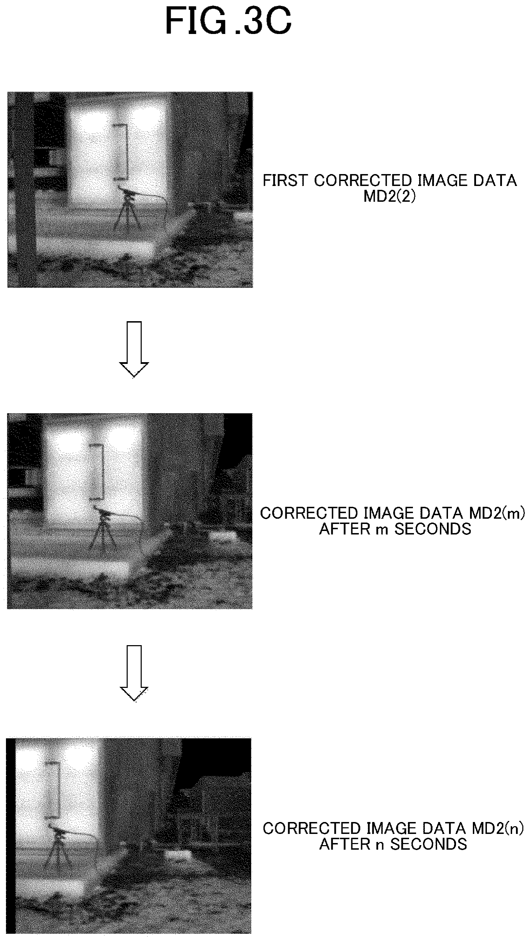

The details of the operation will be described below. FIGS. 3A, 3B, and 3C are explanatory diagrams showing an example of an image before and after blur correction. FIG. 3A shows image data MD before correction, and FIG. 3B shows image data MD1 after correction. FIG. 3C shows image data after correction by a conventional correction method as a comparative example.

As an example of the image data MD before correction, in FIG. 3A, there is blurring due to movement of the imaging field between the first image data MD (1) and the image data MD (m) after m milliseconds. Further, there is blurring due to movement of the imaging field between the image data MD(m) after m seconds and the image data MD(n) after n seconds (n > m).

Figure 3b shows an example of how the image data MD1 after correction is generated by the blur correction success/failure determination section 11 using the method described in International Publication No. WO2017/179510 A1. In Figure 3B, the image position of corrected image data MD1(m) after m seconds has been corrected to align with the image position of the first corrected image data MD1(1). The image position of the corrected image data MD1(n) after n seconds is corrected to align with the image position of the corrected image data MD1(m) after m seconds. As a result, it can be seen that even if the infrared camera 2 is moved by an operation called so-called pan during the shooting of the infrared image, the image positions can be aligned in the corrected image data MD1.

In contrast, conventional correction methods provide correction to eliminate vibration noise caused by so-called camera shake. However, as shown in Figure 3C, the blurring (misalignment of image positions) caused by the movement of the shooting field of view remains between the first corrected image data MD2(1) and the corrected image data MD2(m) after m seconds. In addition, between corrected image data MD2(m) after m seconds and corrected image data MD2(n) after n seconds, it follows and displays the shooting field of view, thus blurring (misalignment of image positions) due to movement of the shooting field of view remains as it is.

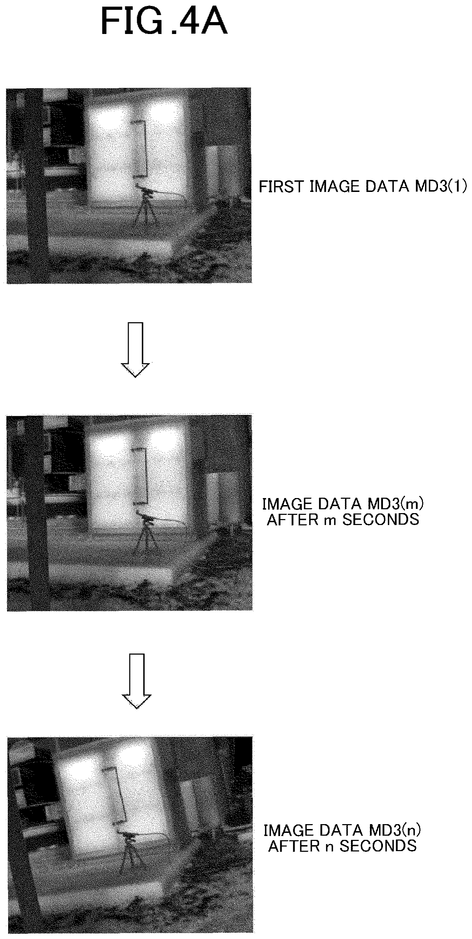

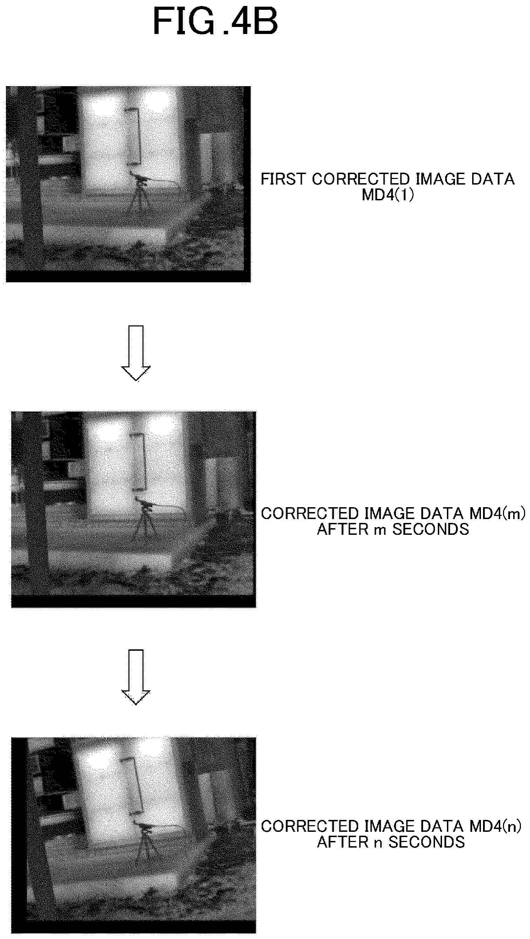

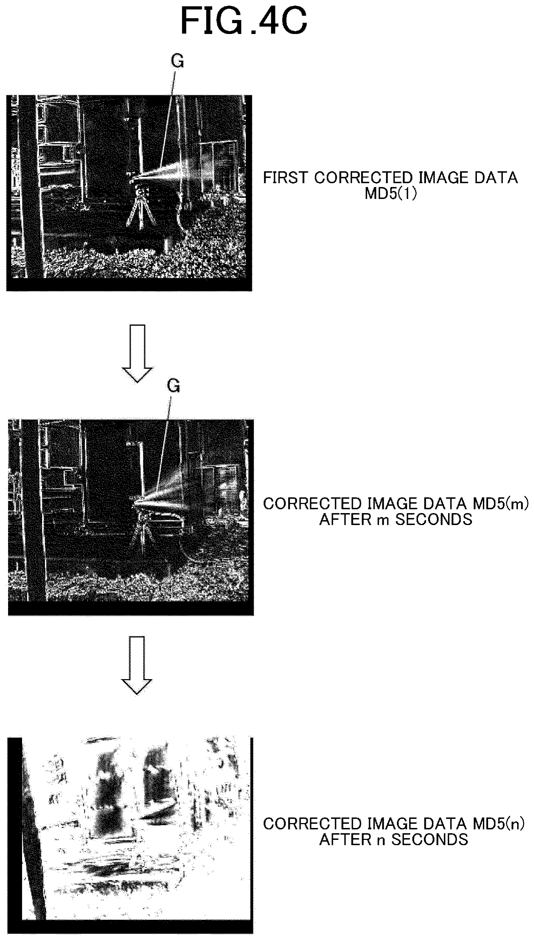

FIGS. 4A, 4B, and 4C are explanatory diagrams showing another example of an image before and after blur correction and the relationship of image processing. FIG. 4A shows image data MD3 before correction, and FIG. 4B shows image data MD4 after correction. Figure 4C shows, for example, corrected image data MD5 that has been image processed by the method described in Patent No. 6245418, filed and registered by the same applicant as the present invention.

In FIG. 4A, it is assumed that there is no blur due to the tilt of the infrared camera 2 between the first image data MD3(1) and the image data MD3(m) after m milliseconds. On the other hand, it is assumed that there is blurring due to the tilt of the infrared rays camera 2 between the image data MD3(m) after m seconds and the image data MD3(n) after n seconds (n > m).

Figure 4B shows an example of how the image data MD4 after correction is generated by the blur correction success/failure determination section 11 using the method described in International Publication No. WO2017/179510 A1. In FIG. 4B, it is assumed that there is no blur due to the tilt of the infrared rays camera 2 between the first image data MD4(1) and the image data MD4(m) after m milliseconds. However, Figure 4B shows the case where the correction to align the image position of corrected image data MD4(n) after n seconds with the image position of corrected image data MD4(m) after m seconds was not correct.

In estimating the amount of gas, a case is considered in which image processing is performed on an infrared image by the method described in Japanese Patent No. 6245418 to generate an image (referred to as a gas image) and the generated image is used. In this method, a gas image is generated by removing specific frequency components from the infrared image.

The corrected image data MD5(1), which was processed using the same method for the first corrected image data MD4(1), is displayed as shown in Figure 4C, with the gas portion G appearing white, and can be distinguished from other areas. The corrected image data MD5 (m), for which image processing was performed using the same method for the corrected image data MD4 (m) after m seconds, is also displayed so that the gas portion G appears white.

However, for corrected image data MD5 (n), which is image processed using the same method for corrected image data MD4 (n) after n seconds, the non-gas portions also appear white. This is because the method described in Japanese Patent No. 6245418 is for extracting temporal changes in pixel value (temperature value) on the premise that the field of view does not move. In the corrected image data MD4(n) after n seconds, since blur remains in the corrected image data MD4(m) after m seconds, even in portions other than gas, temporal changes in apparent pixel value occur. Therefore, for the corrected image data MD5(n), non-gas portions also appear white. If the estimation of the gas amount is performed using such a gas image, it is not possible to correctly estimate the gas amount.

In contrast, consider the case where correction could be made so that the image position of corrected image data MD1(n) after n seconds is aligned with that of corrected image data MD1(m) after m seconds, as shown in Figure 3b. In this case, even in areas other than gas, there is no temporal change in the apparent pixel value. This causes the gas area to appear white. When the estimation of the gas amount is performed using a gas image, the estimation of the gas amount can be performed correctly.

The flow rate estimation performed by the method described in International Publication No. WO2020/110411 A1 requires, for example, the estimation of the concentration thickness product by the method described in Patent No. 6344533. This process is based on the assumption that the field of view is not moving and refers to time variation, so it estimates the wrong concentration-thickness product, which results in the output of the wrong flow rate estimate value. Therefore, when the blur correction fails due to reasons such as large blur, it is necessary to detect the failure, warn the user to hold that firmly, and prevent outputting incorrect flow rate estimation values.

Therefore, it is necessary to determine whether or not the blur correction has been correctly corrected and to notify the user.

Therefore, the blur correction success/failure determination section 11 determines whether the image positions are aligned for the corrected image data MD1. Further, when it is determined that there is an image in which the image positions are not aligned beyond a predetermined threshold value in the corrected image data MD1, the image/warning display part 12 displays a warning on the setting screen. This makes it possible to prevent the estimation of gas flow rate from being performed using an image for which blur correction could not be properly performed.

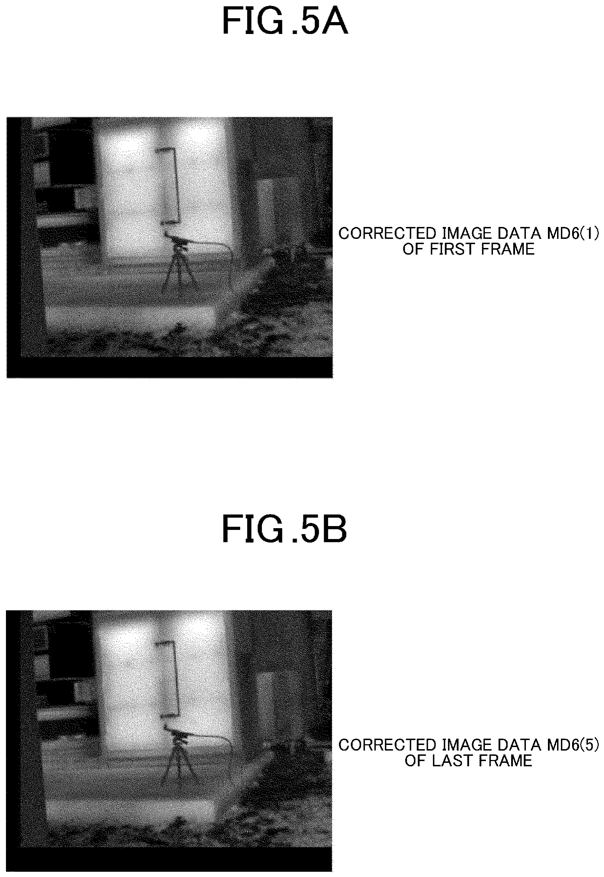

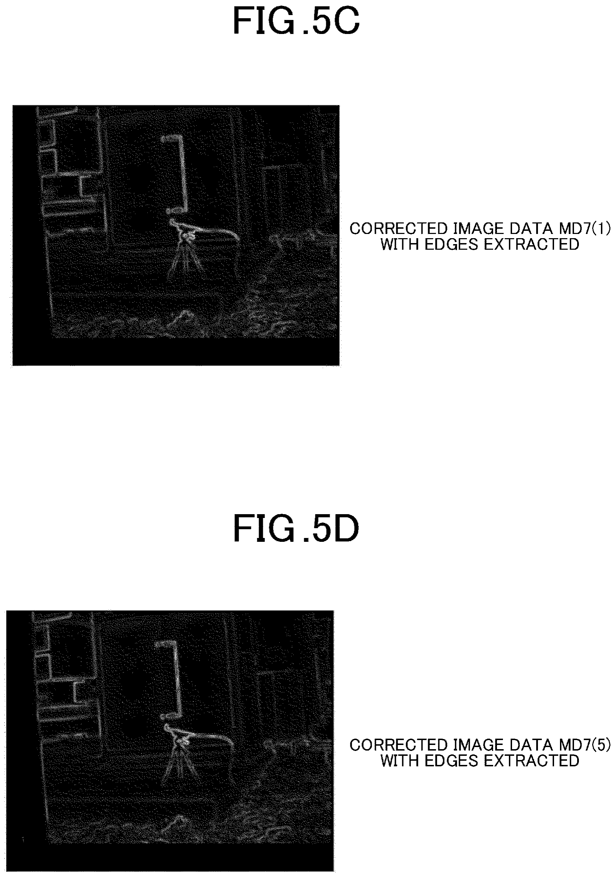

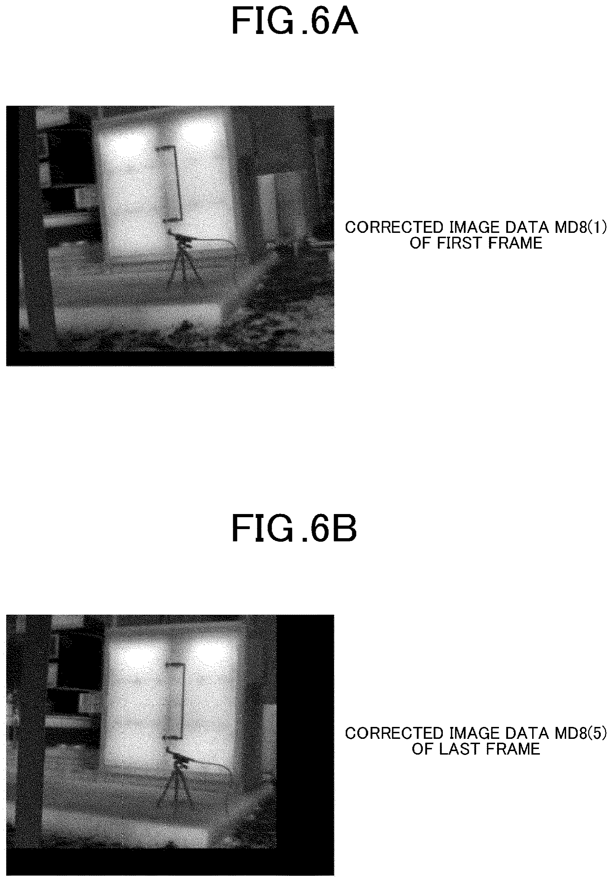

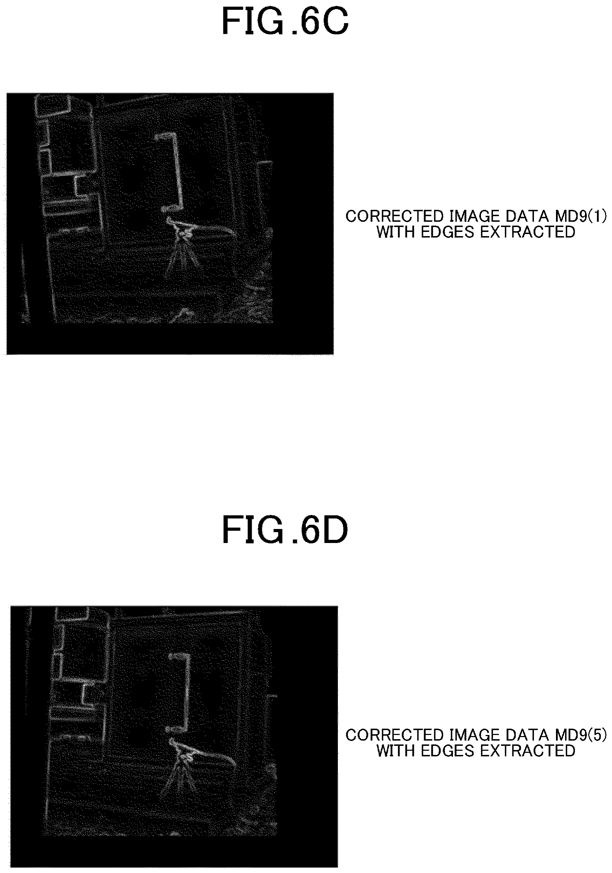

Next, we will explain the method used by the blur correction success/failure determination section 11 to determine whether the blur correction is good or bad. FIGS. 5A and 5B are explanatory diagrams showing an example of an image in which blur correction has been properly performed between time-series images (infrared images). FIGS. 5C and 5D are explanatory diagrams showing an example of an image obtained by extracting edges from an image in which blur correction has been properly performed between time-series images. FIGS. 6A and 6B are explanatory diagrams showing an example of an image in which correct blur correction could not be performed between time-series images (infrared images). FIGS. 6C and 6D are explanatory diagrams each showing an example of an image obtained by extracting an edge from an image for which blur correction could not be properly performed between time-series images.

For example, the estimation of the gas flow rate is performed using image data for every 5 seconds in the video. Figure 5A shows the corrected image MD6(1) of the first frame of a 5-second video, and Figure 5B shows the corrected image MD6(5) of the last frame of the same 5-second video. Figure 5c shows the corrected image MD7(1) with edges extracted from the corrected image MD6(1) in Figure 5A. Figure 5D shows the corrected image MD7(5) with edges extracted from the corrected image MD6(5) in Figure 5B.

Figure 6A shows the corrected image MD8(1) of the first frame of a 5-second video, and Figure 6B shows the corrected image MD8(5) of the last frame of the same 5-second video. Figure 6C shows the corrected image MD9(1) with edges extracted from the corrected image MD7(1) in Figure 6A. Figure 6D shows the corrected image MD9(5) with edges extracted from the corrected image MD7(5) in Figure 6B.

The method for determining blur is, for example, to determine whether the first and last frames in five seconds are similar by calculating the similarity by template matching. The similarity is determined by using a method such as NCC (Normalized Cross-Correlation) as shown in the following equation (1), and by a threshold value to determine whether there is blurring.

[Formula 1]

$$R_{\text{NCC}} = \frac{\sum_{j=0}^{N-1} \sum_{i=0}^{M-1} I(i,j)T(i,j)}{\sqrt{\sum_{j=0}^{N-1} \sum_{i=0}^{M-1} I(i,j)^2 \times \sum_{j=0}^{N-1} \sum_{i=0}^{M-1} T(i,j)^2}} \cdots (1)$$

The infrared images shown in Figures 5A, 5B, 6A, and 6B may be used as is to determine blurring. On the other hand, in order to make the differences easier to compare, a spatial differential filter may be applied, and as shown in FIGS. 5C, 5D, 6C, and 6D, template matching may be performed between edge-extracted images.

Here, the NCC method is used, and comparison is made with the image after edge extraction. When the difference in images is at the level of FIG. 5A and FIG. 5B in the infrared image, the similarity $R_{\text{NCC}}$ calculated by the NCC method using the image with extracted edges shown in FIG. 5C and FIG. 5D was 0.979. In the NCC method, in the case of a complete match, the similarity becomes 1.0. For example, when the threshold value is set to 0.7, in the relationship between FIG. 5A and FIG. 5B, it can be determined that the blur correction is properly performed.

On the other hand, when the difference in infrared images is at the level of FIG. 6A and FIG. 6B, the similarity $R_{\text{NCC}}$ calculated by the NCC method using the image in which the edge shown in FIG. 6C and FIG. 6D is extracted was 0.377. For example, when the threshold value is set to 0.7, in the relationship between FIG. 6A and FIG. 6B, it can be determined that the blur correction is not properly performed. Template matching is not limited to NCC, but different methods such as Zero-mean Normalized Cross-Correlation (ZNCC) and Sum of Absolute Difference (SAD) are also acceptable.

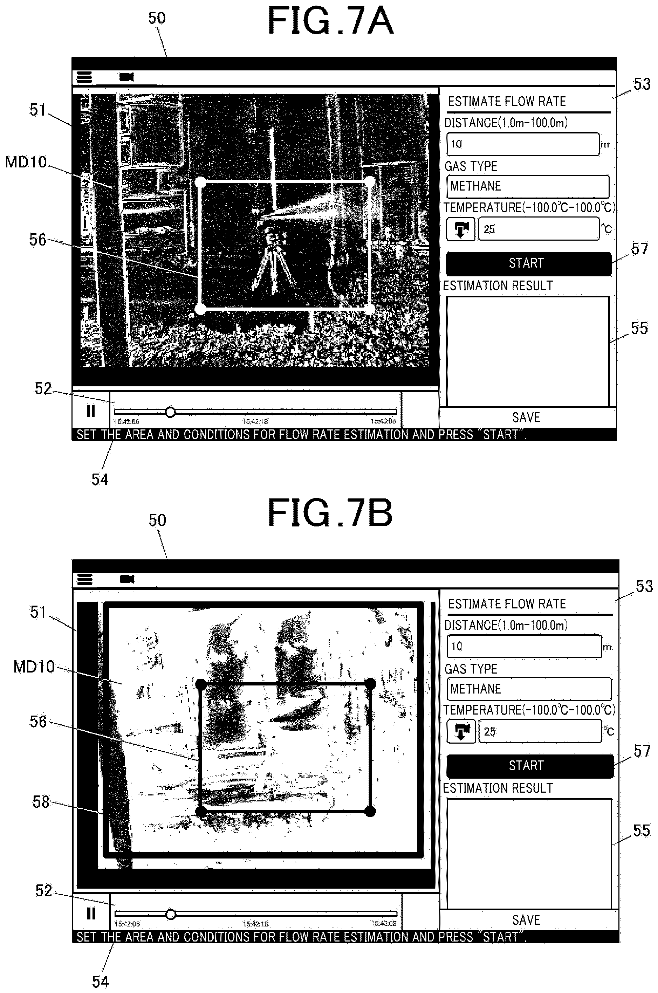

Next, an example of the setting screen 50 displayed by the image/warning display part 12 will be described. FIG. 7A is an explanatory diagram showing an example of a setting screen.

The setting screen 50 that receives a designation of an area for estimating a gas flow rate includes an image display part 51 that displays an image such as a corrected image MD10. The corrected image MD10 displays a gas image generated by performing image processing on an infrared image using the method described in Japanese

Patent No. 6245418, but an infrared image may also be used. In addition, the setting screen 50 includes a time display part 52 that displays the passage of time of the corrected image MD10 to be played back. Further, the setting screen 50 includes a condition setting section 53 in which conditions such as the distance to the point where estimation of the gas flow rate is performed, the type of gas, and the temperature are set. In addition, the setting screen 50 includes an operation guidance section 54 that prompts the operation for specifying the area for estimating the gas flow rate. Further, the setting screen 50 includes a result display part 55 that displays the estimation result of the gas flow rate.

The image/warning display part 12 displays this setting screen 50 on the output section 4 (display 3e).

Next, an example of area designation by the area input section 13 using the setting screen 50 will be described. The user, following the guidance of the operation guidance section 54, designates an area with a frame 56 so as to include an area for estimating the gas flow rate with respect to the corrected image MD10 displayed on the image display part 51. The area input section 13 displays the frame 56 specified by the user on the image display part 51 of the setting screen 50. The corrected image MD10 may be a movie or a still image displayed in chronological order. The frame 56 is applied to all frames to the same extent, for example, for a video of t seconds. Also, for k still images, the same range is applied to all still images.

In addition, the user specifies the temperature, shooting distance, and gas type with the condition setting section 53, and presses the start button 57. When the start button 57 is pressed, the gas flow estimation process is performed in the gas flow rate estimation section 15, and the result of the gas flow estimation is displayed on the result display part 55.

Next, a description will be given of an example of warning output by the blur correction success/failure determination section 11 using the setting screen 50. FIG. 7B is an explanatory diagram showing an output example of a determination result of the success or failure of blur correction.

The blur correction success/failure determination section 11 determines the quality of blur correction by calculating the similarity of the corrected image data having an arbitrary time difference by template matching. When it is determined that there is an image in which the image positions are not aligned beyond a predetermined threshold value in the corrected image data, the image/warning display part 12 displays a warning on the setting screen 50 as shown in FIG. 7B.

A warning that the blur correction is not performed correctly is given, for example, by displaying a predetermined color warning frame 58 on the corrected image MD10 in the image display part 51.

If the blur correction is not properly performed, the blur correction success/failure determination section 11 determines that the corrected image MD10 is unacceptable, and the image/warning display part 12 displays, for example, a red warning frame 58 as a warning color on the image display part 51.

The image/warning display part 12 displays a red warning frame 58 while a corrected image, which has been determined that the blur correction has not been properly performed, is being displayed during repeated playback of the video of the corrected image. For example, when a corrected image is determined to have not been properly blur-corrected in the video for 5 seconds, the image/warning display part 12 displays a red warning frame 58 for the corresponding 5 seconds. The user can determine that re-shooting is necessary if, for example, the warning frame 58 is displayed for most of the time during playback of the corrected image, such as for 25 seconds out of a 30-second video.

Warnings for incorrect blur correction are not limited to the warning frame 58. For example, a message may be displayed on the setting screen 50 so that the user holds the infrared rays camera 2 firmly and takes a picture.

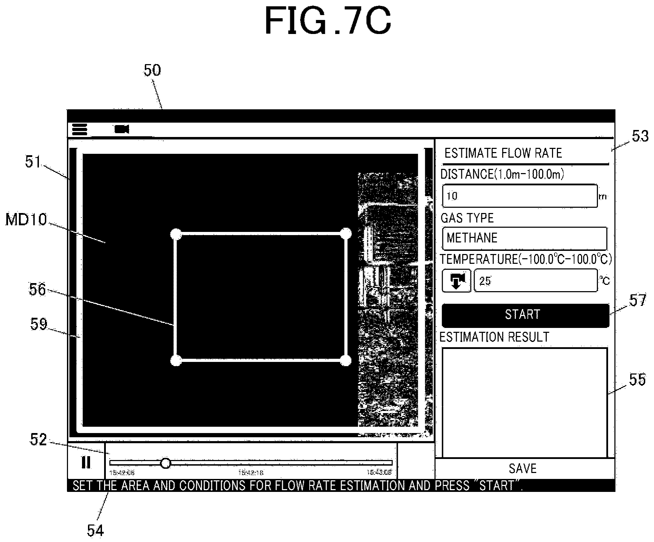

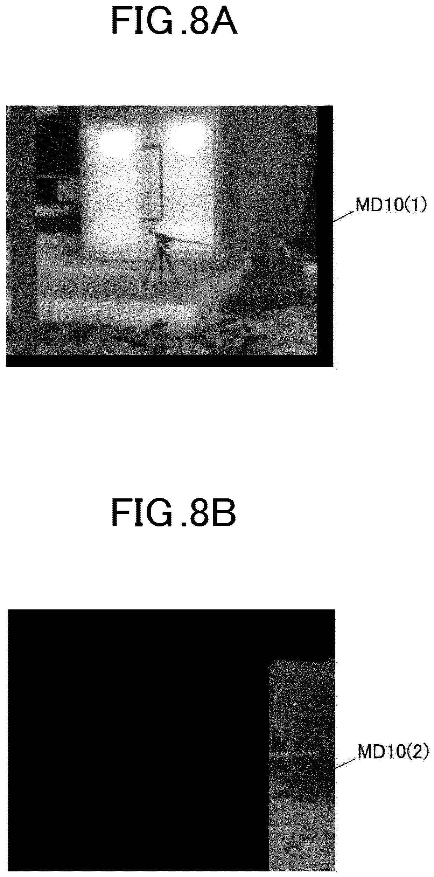

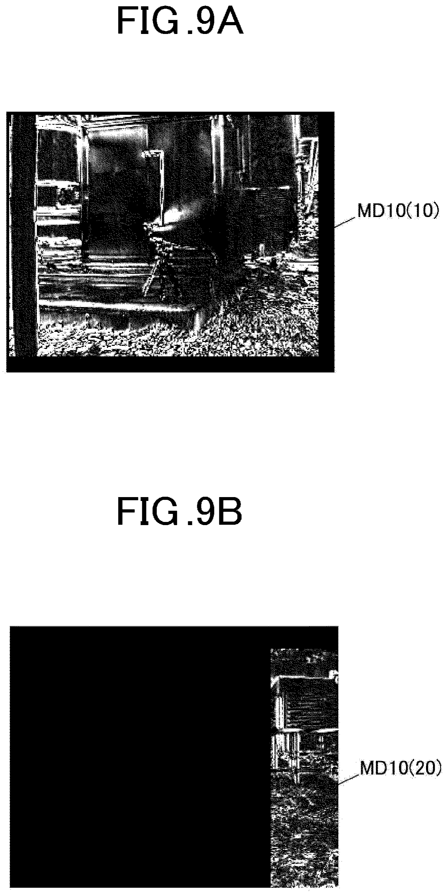

Next, an example of warning output by the area success/failure determination section 14 is described. FIG. 7C is an explanatory diagram showing an output example of a determination result of the acceptability of area input. FIG. 8A is an explanatory diagram showing an example of an image (infrared image) in which the area where the gas was present is within the imaging field of view and correct blur correction has been performed, and FIG. 8B is an explanatory diagram showing an example of an image (infrared image) in which the area where the gas was present is outside the imaging field of view because the image was taken while panning to the right. Further, FIG. 9A is an explanatory diagram showing an example of an image (gas image) in which the area where the gas was present is within the imaging field of view and correct blur correction has been performed, and FIG. 9B is an explanatory diagram showing an example of an image (gas image) in which the area where the gas was present is outside the imaging field of view because the image was taken while panning to the right.

For the corrected image MD10(1) shown in FIG. 8A, the corrected image MD10(2) shown in FIG. 8B is panned to the right, so the area where the gas was captured is outside the imaging field and is blur-corrected. Therefore, in FIG. 8B, an image including the monitoring target of gas leakage is not included. Thus, the corrected image MD10 (10), which is a gas image shown in FIG. 9A generated from the infrared image shown in FIG. 8A, includes an image including a monitoring target of gas leakage. On the other hand, the corrected image MD10 (20) shown in FIG. 9B, which is a gas image generated from the infrared image shown in FIG. 8B, does not include an image including a monitoring target of gas leakage.

FIG. 7C is an example in which an area for estimating the gas flow rate is designated by the frame 56 on the setting screen 50 for the corrected image MD10 (20) shown in FIG. 9B. In this case, the area success/failure determination section 14 determines that the corrected image MD10 including the monitoring target of gas leakage does not exist in the area specified by the frame 56 on the setting screen 50. The image/warning display part 12 determines that no image including the monitoring target of gas leakage exists in the set area, and as shown in FIG. 7C, displays a warning on the setting screen 50.

A warning that no image exists in the set area is given, for example, by displaying a warning frame 59 of a predetermined color different from blur correction on the corrected image MD10 in the image display part 51.

The image/warning display part 12 displays, for the corrected image MD10 for which the area success/failure determination section 14 has determined that no image exists in the set area, a warning frame 59 in a warning color, such as yellow, on the image display part 51. The image/warning display part 12 displays a yellow warning frame 59 while a corrected image, which is determined to have no image present within the set area during repeated playback of the corrected image video, is being displayed.

Note that a warning regarding the absence of an image within the set area is not limited to the warning frame 59. For example, a message indicating that it is out of the field of view may be displayed on the setting screen 50.

If an area for estimating the gas flow rate is specified by the frame 56 on the setting screen 50 for the corrected image MD10 (10) shown in FIG. 9A, the result will be the same as the output example shown in FIG. 7A. In this case, the area success/failure determination section 14 determines that the corrected image MD10 exists within the area specified by the frame 56 on the setting screen 50. The image/warning display part 12 determines that an image exists in the set area, so as shown in FIG. 7A, does not display a warning on the setting screen 50.

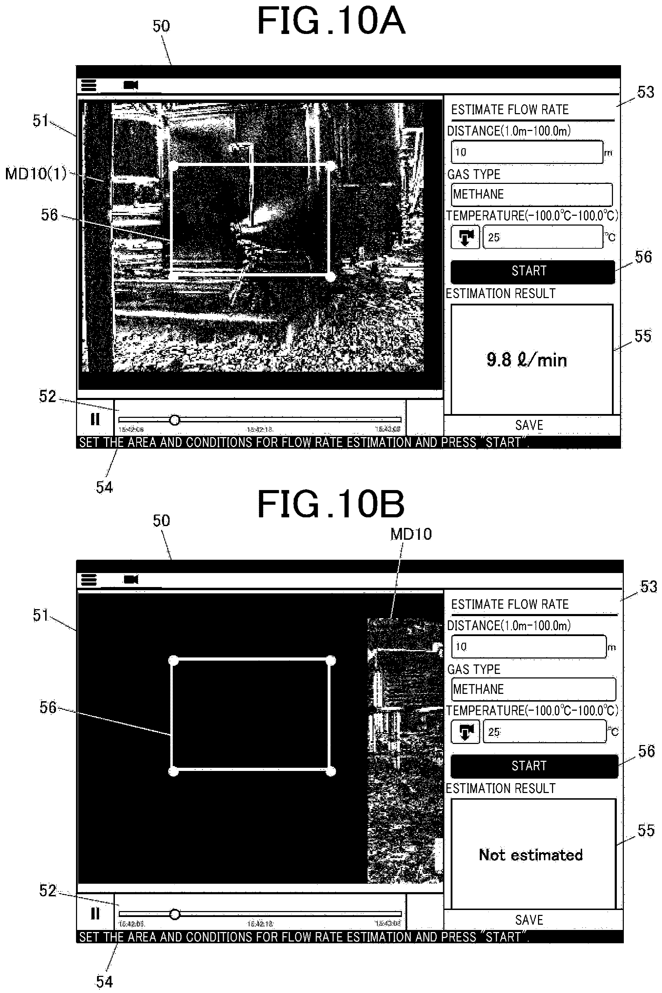

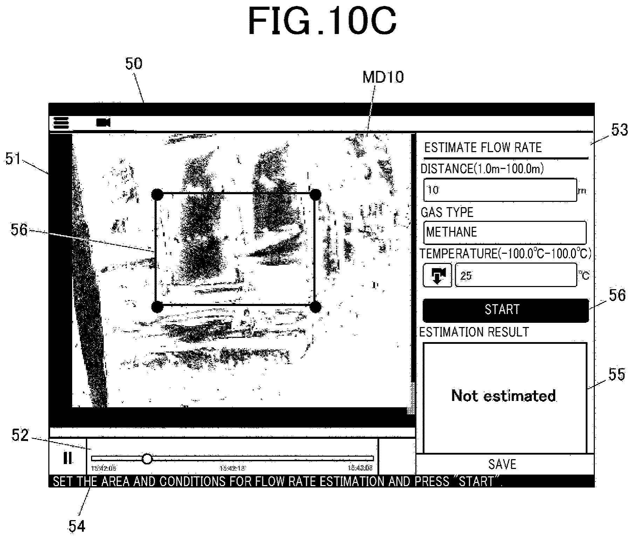

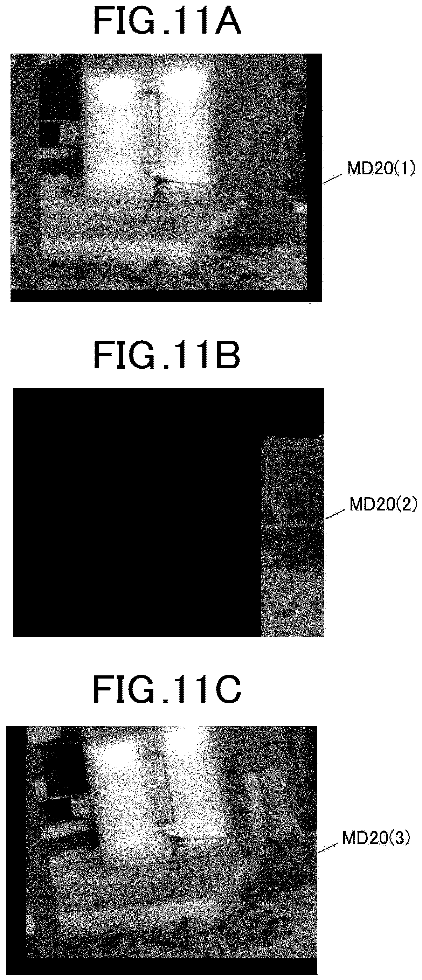

Next, an example of the output of the gas flow estimation results by the gas flow rate estimation section 15 is described. FIG. 10A is an explanatory diagram showing an example of output of the estimation result of the gas flow rate, and FIGS. 10B and 10C are explanatory diagrams showing examples of output when the gas flow rate cannot be estimated. In addition, FIGS. 11A, 11B, and 11C are explanatory diagrams showing an example of an original infrared image from which a gas image used for estimating the gas flow rate was generated.

Consider the case where the target of gas flow rate estimation is the corrected image MD20(1), in which blur correction is properly performed and an image including a gas leak monitoring target exists, as shown in FIG. 11A. In this case, as shown in the corrected image MD10(1) in Figure 10A, the monitored object for gas leakage is located in the area designated by frame 56.

In addition, in the case of a gas image generated by performing image processing on an infrared image using the method described in Japanese Patent No. 6245418, as described above, the gas portion appears white.

For this reason, in the corrected image MD10(1), in which blur correction is properly performed and the image including the monitoring target of gas leakage exists within the area specified by the frame 56, the portion of the gas is made prominent. Thus, the gas flow rate can be estimated, for example, by the method described in International Publication No. WO2020/110411 A1.

Therefore, when blur correction is properly performed and it is determined that an image including the monitoring target of gas leakage exists, if the start button 57 is pressed, estimation by the gas flow rate estimation section 15 is performed. Then, the image/warning display part 12 displays the estimated amount of gas on the result display part 55 as shown in FIG. 10A.

Consider the case where the target of gas flow rate estimation is a corrected image MD20(2) in which, as shown in FIG. 11B, there is a loss to such an extent that an image including the monitoring target of gas leakage does not exist. In this case, as shown in the corrected image MD10(2) in Figure 10B, there is no target for gas leak monitoring within the area designated by the frame 56.

Therefore, in the corrected image MD10(2) determined not to contain an object to be monitored for gas leakage, the gas flow rate estimation section 15 cannot correctly estimate the gas flow rate.

Therefore, even if the start button 57 is pressed, if it is determined that there is no image including the monitoring target of gas leakage, estimation by the gas flow rate estimation section 15 is not performed and is set to non-execution. Then, the image/warning display part 12 displays on the result display part 55 that the gas amount cannot be estimated, as shown in FIG. 10B.

The target of the estimation of the gas flow rate will be considered in the case where the corrected image MD20(3), for which blur correction could not be properly performed as shown in FIG. 11C, is used. In this case, the gas image generated from the infrared image appears white not only in the gas portion but also in the non-gas portion, as in the corrected image MD10(3) shown in FIG. 10C.

Therefore, the gas flow rate cannot be correctly estimated by the gas flow rate estimation section 15 for the corrected image MD10 (3), which is determined to be incorrectly corrected for blur.

Therefore, even if the button 57 is pressed, if it is determined that the blur correction has not been properly performed, the estimation by the gas flow rate estimation section 15 is not performed and is set to non-execution. Then, the image/warning display part 12 displays on the result display part 55 that the gas amount cannot be estimated, as shown in FIG. 10C.

In the estimation process of the gas flow rate described above, in the setting screen 50 for repeatedly playing back the video, the estimated value is updated for each corrected image data for, for example, 5 seconds of flow rate estimation. If the area judgment is OK and the blur judgement is OK and the estimation is correct, the estimated value is displayed and updated as shown in Figure 10A. If the relevant 5 seconds is an area judgment NG or a blur judgment NG ,it will display the fact that the estimation could not be made, as shown in Fig. 10B and Fig. 10C.

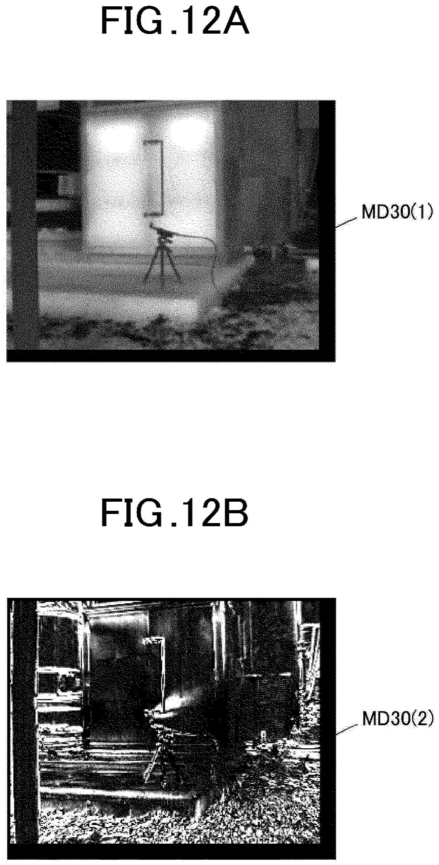

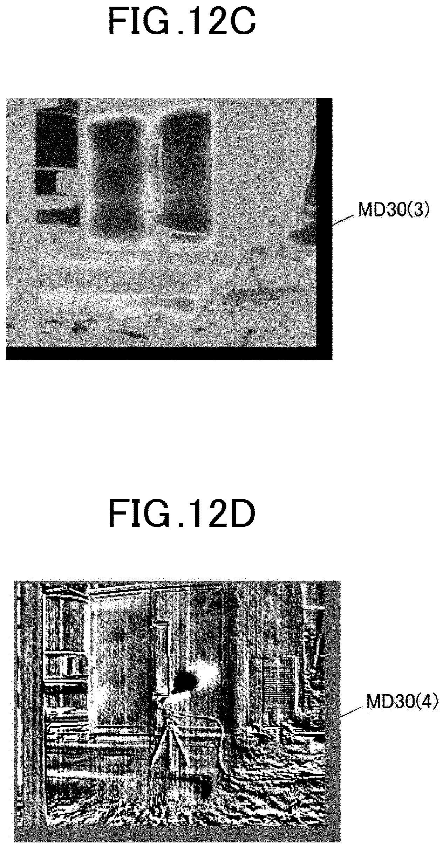

Next, an image used for specifying an area by the area input section 13 using the setting screen 50 will be described. FIGS. 12A, 12B, 12C, and 12D are explanatory diagrams showing an example of an image used for area designation.

In the case of the gas image MD30(2) shown in FIG. 12B, which is generated by performing image processing on the infrared image MD30(1) shown in FIG. 12A using the method described in Japanese Patent No. 6245418, as described above, the gas portion appears white. This makes it easier to see the target of gas leak monitoring when designating an area. Therefore, in the above example, the area designation is described using a gas image, but it may be described using another image. For the infrared image MD30(1) shown in Figure 12A and the temperature image MD30(3) shown in Figure 12C, gas is visible in the case of very dense gas concentration. Further, the difference image MD30(4) shown in FIG. 12D displays, for example, a time difference (frame difference between frames separated by 0.2 seconds) of the infrared image MD30(1). Further, a gas image may be displayed as an image for specifying an area, and at least one of an infrared image, a temperature image, and a difference image may be displayed so as to be referable. The temperature image MD30(3) shown in FIG. 12C is originally a color image, and, for example, a high temperature portion is shown in red and a low temperature portion is shown in blue. However, here, an image displayed in gray scale is used instead of color.

Industrial Applicability

The present invention can be used for an image processing apparatus and a gas flow rate estimation system that estimate a gas flow rate from a time-series of images. Further, the present invention can be used for a program executed by a computer of an image processing apparatus, which estimates a gas flow rate from a time-series image, and a gas flow rate estimation method.

Reference Signs List

1 ... gas flow rate estimation system, 2 ... infrared rays camera, 3 ... gas flow rate estimation apparatus (image processing apparatus), 3a ... CPU (computer), 3b ... RAM, 3c ... ROM, 3d ... HDD, 3e ... display, 3f... communication interface, 3g ... keyboard, 3h ... bus, 4 ... output section, 5 ... optical system, 6 ... filter, 7 ... imaging element, 8 ... signal processing section, 9 ... image data input section, 10 ... blur correction section, 11 ... blur correction success/failure determination section, 12 ... image/warning display part, 13 ... area input section, 14 ... area success/failure determination section, 15 ... gas flow rate estimation section

**Claims**

1. An image processing apparatus that estimates a gas flow rate from time-series images, the apparatus comprising:

   an image input section to which time-series images photographed of a subject including a monitoring target are input;
   a correction section that performs correction to align image positions of the monitoring target among the time-series images;
   an area input section that receives a designation of an area for estimating a gas flow rate;
   a display part that displays a setting screen for receiving, at the area input section, the designation of the area for estimating the gas flow rate for the time-series images for which the correction to align the image positions has been performed; and
   an estimation section that estimates the gas flow rate from the time-series images for which the area for estimating the gas flow rate is set.

2. The image processing apparatus according to claim 1, comprising
   a correction success/failure determination section that determines whether the image positions of the time-series images, for which the correction to align the image positions has been performed, are aligned.

3. The image processing apparatus according to claim 2, comprising
   a warning section that outputs a warning in response to determination that the image positions of the time-series images, for which the correction to align the image positions has been performed, are not aligned.

4. The image processing apparatus according to claim 3, wherein
   the estimation section does not perform estimation of the gas flow rate in response to the determination that the image positions of the time-series images, for which the correction to align the image positions has been performed, are not aligned.

5. The image processing apparatus according to claim 2, wherein
   the correction success/failure determination section determines whether the image positions of the time-series images, for which the correction to align the image positions has been performed, are aligned, by performing template matching on the time-series images.

6. The image processing apparatus according to claim 1, comprising
   an area success/failure determination section that determines whether a time-series image among the time-series images, for which the correction to align the image positions has been performed, exists in the area set for estimating the gas flow rate.

7. The image processing apparatus according to claim 6, comprising

a warning section that outputs a warning in response to determination that the time-series image among the time-series images, for which the correction to align the image positions has been performed, does not exist in the area set for estimating the gas flow rate.

8. The image processing apparatus according to claim 6, wherein
the estimation section does not perform estimation of the gas flow rate in response to determination that the time-series image among the time-series images, for which the correction to align the image positions has been performed, does not exist in the area set for estimating the gas flow rate.

9. The image processing apparatus according to claim 1, wherein
the display part displays, on the setting screen, at least one of an infrared image, an image obtained by performing image processing to extract a frequency component from the infrared image, an image obtained by performing frame difference processing between frames of a moving image, or an image converted to a temperature, as the time-series images for which the correction to align the image positions has been performed.

10. A gas flow rate estimation system comprising:

an infrared rays camera that photographs a subject including a monitoring target; and
an image processing apparatus that estimates a gas flow rate from time-series images taken by the infrared rays camera, wherein
the image processing apparatus includes:

an image input section to which time-series images photographed of the subject including the monitoring target by the infrared rays camera are input;
a correction section that performs correction to align image positions of the monitoring target among the time-series images;
an area input section that receives a designation of an area for estimating a gas flow rate;
a display part that displays a setting screen for receiving, at the area input section, the designation of the area for estimating the gas flow rate for the time-series images for which the correction to align the image positions has been performed; and
an estimation section that estimates the gas flow rate from the time-series images for which the area for estimating the gas flow rate is set.

11. A program executed by a computer of an image processing apparatus that estimates a gas flow rate from time-series images, the program causing the computer to execute:

a step of inputting time-series images photographed of a subject including a monitoring target;
a step of performing correction to align image positions of the monitoring target among the time-series images;
a step of receiving a designation of an area for estimating a gas flow rate;
a step of displaying a setting screen for receiving the designation of the area for estimating the gas flow rate for the time-series images for which the correction to align the image positions has been performed; and
a step of estimating the gas flow rate from the time-series images for which the area for estimating the gas flow rate is set.

12. A gas flow rate estimation method comprising:

a step of inputting time-series images photographed of a subject including a monitoring target;
a step of performing correction to align image positions of the monitoring target among the time-series images;
a step of receiving a designation of an area for estimating a gas flow rate;
a step of displaying a setting screen for receiving the designation of the area for estimating the gas flow rate for the time-series images for which the correction to align the image positions has been performed; and
a step of estimating the gas flow rate from the time-series images for which the area for estimating the gas flow rate is set.

# FIG.1A

**INFRARED RAYS CAMERA** (2)

OPTICAL SYSTEM (5)

↓

FILTER (6)

↓

IMAGING ELEMENT (7)

↓

SIGNAL PROCESSING SECTION (8)

↓

**GAS FLOW RATE ESTIMATION APPARATUS (IMAGE PROCESSING APPARATUS)** (3) (1)

IMAGE DATA INPUT SECTION (9)

BLUR CORRECTION SECTION (10)

BLUR CORRECTION SUCCESS/FAILURE DETERMINATION SECTION (11)

IMAGE/WARNING DISPLAY PART (12)

AREA INPUT SECTION (13)

AREA SUCCESS/FAILURE DETERMINATION SECTION (14)

GAS FLOW RATE ESTIMATION SECTION (15)

↓

OUTPUT SECTION (4)

# FIG.1B

```
                          3a
                          ┌─────┐
                          │ CPU │
                          └─────┘
                             ↕
 ═══════════════════════════════════════════════════════════════
  ↕        ↕        ↕        ↕              ↕            ↕
┌─────┐ ┌─────┐ ┌─────┐ ┌─────────┐ ┌──────────────┐ ┌──────────┐
│ RAM │ │ ROM │ │ HDD │ │ DISPLAY │ │ COMMUNICATION│ │ KEYBOARD │
│     │ │     │ │     │ │         │ │  INTERFACE   │ │          │
└─────┘ └─────┘ └─────┘ └─────────┘ └──────────────┘ └──────────┘
  3b      3c      3d        3e            3f              3g
```

3h

# FIG.2

```
              ┌──────────┐
              │  START   │
              └──────────┘
                   │
                   ▼
        ┌──────────────────────┐
   SA1  │  BLUR CORRECTION /    │
        │  BLUR DETERMINATION   │
        └──────────────────────┘
                   │
                   ▼
        ┌──────────────────────┐
   SA2  │ IMAGE / WARNING DISPLAY │
        └──────────────────────┘
                   │
                   ▼
        ┌──────────────────────┐
   SA3  │   AREA INPUT /        │
        │  AREA DETERMINATION   │
        └──────────────────────┘
                   │
                   ▼
        ┌──────────────────────┐
   SA4  │    FLOW RATE          │
        │   ESTIMATION          │
        └──────────────────────┘
                   │
                   ▼
              ┌──────────┐
              │   END    │
              └──────────┘
```

# FIG.3A

FIRST IMAGE DATA MD(1)

IMAGE DATA MD(m)
AFTER m SECONDS

IMAGE DATA MD(n)
AFTER n SECONDS

# FIG.3B

FIRST CORRECTED IMAGE DATA
MD1(1)

CORRECTED IMAGE DATA MD1(m)
AFTER m SECONDS

CORRECTED IMAGE DATA MD1(n)
AFTER n SECONDS

# FIG.3C

FIRST CORRECTED IMAGE DATA
MD2(2)

CORRECTED IMAGE DATA MD2(m)
AFTER m SECONDS

CORRECTED IMAGE DATA MD2(n)
AFTER n SECONDS

# FIG.4A

FIRST IMAGE DATA MD3(1)

IMAGE DATA MD3(m)
AFTER m SECONDS

IMAGE DATA MD3(n)
AFTER n SECONDS

# FIG.4B

FIRST CORRECTED IMAGE DATA
MD4(1)

CORRECTED IMAGE DATA MD4(m)
AFTER m SECONDS

CORRECTED IMAGE DATA MD4(n)
AFTER n SECONDS

# FIG.4C

FIRST CORRECTED IMAGE DATA
MD5(1)

CORRECTED IMAGE DATA MD5(m)
AFTER m SECONDS

CORRECTED IMAGE DATA MD5(n)
AFTER n SECONDS

# FIG.5A

CORRECTED IMAGE DATA MD6(1)
OF FIRST FRAME

# FIG.5B

CORRECTED IMAGE DATA MD6(5)
OF LAST FRAME

# FIG.5C

CORRECTED IMAGE DATA MD7(1)
WITH EDGES EXTRACTED

# FIG.5D

CORRECTED IMAGE DATA MD7(5)
WITH EDGES EXTRACTED

# FIG.6A

CORRECTED IMAGE DATA MD8(1)
OF FIRST FRAME

# FIG.6B

CORRECTED IMAGE DATA MD8(5)
OF LAST FRAME

# FIG.6C

CORRECTED IMAGE DATA MD9(1)
WITH EDGES EXTRACTED

# FIG.6D

CORRECTED IMAGE DATA MD9(5)
WITH EDGES EXTRACTED

# FIG.7A

ESTIMATE FLOW RATE

DISTANCE(1.0m-100.0m)

10 m

GAS TYPE

METHANE

TEMPERATURE(-100.0℃-100.0℃)

25 ℃

START

ESTIMATION RESULT

SAVE

SET THE AREA AND CONDITIONS FOR FLOW RATE ESTIMATION AND PRESS "START".

# FIG.7B

ESTIMATE FLOW RATE

DISTANCE(1.0m-100.0m)

10 m

GAS TYPE

METHANE

TEMPERATURE(-100.0℃-100.0℃)

25 ℃

START

ESTIMATION RESULT

SAVE

SET THE AREA AND CONDITIONS FOR FLOW RATE ESTIMATION AND PRESS "START".

# FIG.7C

50

51

MD10

56

59

52

54

## ESTIMATE FLOW RATE

DISTANCE(1.0m-100.0m)

| 10 | m |

GAS TYPE

| METHANE |

TEMPERATURE(-100.0℃-100.0℃)

| | 25 | ℃ |

START

ESTIMATION RESULT

SAVE

53

57

55

15:42:06     15:42:18     15:43:06

SET THE AREA AND CONDITIONS FOR FLOW RATE ESTIMATION AND PRESS "START".

# FIG.8A

MD10(1)

# FIG.8B

MD10(2)

# FIG.9A

MD10(10)

# FIG.9B

MD10(20)

# FIG.10A

ESTIMATE FLOW RATE

DISTANCE(1.0m-100.0m)

10　　　　　　　　　m

GAS TYPE

METHANE

TEMPERATURE(-100.0℃-100.0℃)

25　　　　　℃

START

ESTIMATION RESULT

9.8 ℓ/min

SAVE

SET THE AREA AND CONDITIONS FOR FLOW RATE ESTIMATION AND PRESS "START".

# FIG.10B

ESTIMATE FLOW RATE

DISTANCE(1.0m-100.0m)

10　　　　　　　　　m

GAS TYPE

METHANE

TEMPERATURE(-100.0℃-100.0℃)

25　　　　　℃

START

ESTIMATION RESULT

Not estimated

SAVE

SET THE AREA AND CONDITIONS FOR FLOW RATE ESTIMATION AND PRESS "START".

# FIG.10C

50

MD10

53

51

ESTIMATE FLOW RATE

DISTANCE(1.0m-100.0m)

10 m

GAS TYPE

METHANE

TEMPERATURE(-100.0°C-100.0°C)

25 °C

56

START

56

ESTIMATION RESULT

55

Not estimated

52

15:42:05    15:42:18    15:43:08

SET THE AREA AND CONDITIONS FOR FLOW RATE ESTIMATION AND PRESS "START".

SAVE

54

# FIG.11A

MD20(1)

# FIG.11B

MD20(2)

# FIG.11C

MD20(3)

# FIG.12A

MD30(1)

# FIG.12B

MD30(2)

# FIG.12C

MD30(3)

# FIG.12D

MD30(4)

## INTERNATIONAL SEARCH REPORT

| | International application No. |
|---|---|
| | **PCT/JP2024/008698** |

**A.  CLASSIFICATION OF SUBJECT MATTER**

*G01M 3/38*(2006.01)i; *G01F 1/00*(2022.01)i; *G01F 1/7086*(2022.01)i; *G01M 3/02*(2006.01)i; *G01P 5/18*(2006.01)i; *H04N 23/62*(2023.01)i; *H04N 23/63*(2023.01)i; *H04N 23/68*(2023.01)i
FI:   G01M3/38 H; H04N23/62; H04N23/63 310; H04N23/63 330; H04N23/68; G01M3/02 M; G01P5/18 F; G01F1/00 J; G01F1/7086

According to International Patent Classification (IPC) or to both national classification and IPC

**B.  FIELDS SEARCHED**

Minimum documentation searched (classification system followed by classification symbols)

G01M3/38; G01F1/00; G01F1/7086; G01M3/02; G01P5/18; H04N23/62; H04N23/63; H04N23/68

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
|---|---|---|
| Y | WO 2020/110411 A1 (KONICA MINOLTA, INC.) 04 June 2020 (2020-06-04) fig. 1A-18 | 1-5, 9-12 |
| A | | 6-8 |
| Y | JP 2003-164431 A (KABUSHIKI KAISHA TOPCON) 10 June 2003 (2003-06-10) fig. 2 | 1-5, 9-12 |
| Y | JP 8-325614 A (KAWASAKI STEEL CORP.) 10 December 1996 (1996-12-10) paragraph [0014], fig. 1, 2 | 1-5, 9-12 |
| Y | JP 2019-184485 A (KONICA MINOLTA, INC.) 24 October 2019 (2019-10-24) paragraph [0056], fig. 3 | 1-5, 9-12 |
| Y | JP 2021-165637 A (KONICA MINOLTA, INC.) 14 October 2021 (2021-10-14) fig. 3D, 3E, 4, claim 4 | 3-4 |

☐ Further documents are listed in the continuation of Box C.       ☑ See patent family annex.

| | |
|---|---|
| *       Special categories of cited documents: | "T"  later document published after the international filing date or priority date and not in conflict with the application but cited to understand the principle or theory underlying the invention |
| "A"   document defining the general state of the art which is not considered to be of particular relevance | |
| "D"   document cited by the applicant in the international application | "X"  document of particular relevance; the claimed invention cannot be considered novel or cannot be considered to involve an inventive step when the document is taken alone |
| "E"   earlier application or patent but published on or after the international filing date | |
| "L"   document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"  document member of the same patent family |

| Date of the actual completion of the international search | Date of mailing of the international search report |
|---|---|
| **01 April 2024** | **16 April 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/008698**

| Patent document cited in search report | | | Publication date (day/month/year) | Patent family member(s) | | | Publication date (day/month/year) |
|---|---|---|---|---|---|---|---|
| WO | 2020/110411 | A1 | 04 June 2020 | US 2022/0034742 A1 fig. 1A-18 | | | |
| JP | 2003-164431 | A | 10 June 2003 | (Family: none) | | | |
| JP | 8-325614 | A | 10 December 1996 | (Family: none) | | | |
| JP | 2019-184485 | A | 24 October 2019 | (Family: none) | | | |
| JP | 2021-165637 | A | 14 October 2021 | WO 2020/012864 A1 fig. 3D, 3E, 4, claim 4 | | | |

Form PCT/ISA/210 (patent family annex) (July 2022)

## REFERENCES CITED IN THE DESCRIPTION

**Patent documents cited in the description**

- WO 2020110411 A
- WO 2017179510 A1
- WO 2020110411 A1
- WO 6245418 A
- JP 6245418 B
- WO 6344533 A